# DEMANDE DE BREVET EUROPEEN

(11) **EP 1 672 640 A1**
(43) Date de publication de la demande: **21.06.2006**
(21) Numéro de dépôt: 05292294.5
(22) Date de dépôt: 28.10.2005
(51) Int. Cl.: G11B 33/04, B42F 15/00, B65D 85/57

(54) **Filière à CD**

(30) Priorité: 14.12.2004 CA 2491160
(71) Demandeur: Nicolet Plastique Ltée, Nicolet, Quebec J3T 1W3 (CA)
(72) Inventeur: Ménard, Louis, Québec G8Y 7N9 (CA)
(74) Mandataire: Kurtz, Laurent Charles Edmond

(57) **Abrégé**

L'invention a pour objet un support de rangement de CD se présentant sous la forme d'une filière de type conventionnel, dont au moins une des faces est pourvue de zones dans lesquelles des CD peuvent être attachés au moyen d'un système d'accrochage habituel tel que celui que l'on trouve dans les boîtiers à CD. Cette filière qui peut supporter plusieurs CD, de préférence 8,10 ou 12, est extrêmement mince et rangeable dans n'importe quel tiroir ou espace de rangement pour filières, et ce éventuellement avec des filières de type conventionnel.

## Description

### Domaine de l'invention

L'invention a pour objet un support de rangement de CD se présentant sous la forme d'une filière installable dans un tiroir ou tout autre espace de rangement conçu pour recevoir des filières de type classique.

### Arrière plan technique

Avec l'avènement du multimédia, les CD et DVD numériques envahissent littéralement les résidences et les espaces de bureau. Les CD et DVD sont habituellement rangés dans des boîtiers conventionnels qui prennent beaucoup de place. En fait, les solutions de rangement pour des grandes quantités de CD sont rares et inadéquates. Une de ces solutions connues consiste à utiliser un carrousel de CD se présentant comme une pile de CD sans pochette. Ceci n'est toutefois pas réellement adéquat, puisque l'utilisation d'un carrousel de CD nécessite là encore la présence d'espace de rangement approprié.

### Sommaire de l'invention

II a maintenant été découvert que le problème ci-dessus évoqué peut aisément être solutionné en utilisant un support de rangement de CD se présentant sous la forme d'une filière de type conventionnel, dont au moins une des faces est pourvue de zones dans lesquelles des CD peuvent être attachés au moyen d'un système d'accrochage habituel tel que celui que l'on trouve dans les boîtiers à CD de type conventionnel.

Cette filière qui peut supporter plusieurs CD, de préférence huit, dix ou douze, est extrêmement mince et rangeable dans n'importe quel tiroir ou espace de rangement pour filières, et ce éventuellement avec des filières de type conventionnel.

L'invention sera mieux comprise à la lecture de la description non restrictive qui suit de deux modes de réalisation préférés de l'invention, faite en se référant aux dessins annexés.

### Brève description des dessins

La figure 1 est une vue en perspective éclatée d'une filière à CD selon un premier mode de réalisation de l'invention, montrant les CD en alignement avec leurs zones d'attache;
la figure 2 est une vue en perspective montrant plusieurs filières à CD telles qu'illustrées sur la figure 1, installées sur un support à filière de type conventionnel;
les figures 3 à 5 sont des vues de face avant, côté et de face arrière de la filière à CD illustrée sur la figure 1;
la figure 6 est une vue en perspective avec des portions agrandies de la filière à CD illustrée sur les figures 1 et 3 à 5;
la figure 7 est une vue partielle de face d'une des zones d'attache de la filière illustrée sur les figures précédentes;
la figure 8 est une vue en coupe selon la ligne VIII-VIII du centre de la zone illustrée en vue partielle sur la figure 7;
la figure 9 est une vue en perspective d'une filière à CD selon un second mode de réalisation de l'invention;
les figures 10 et 11 sont des vues de face avant et de côté de la filière à CD illustrée sur la figure 9;
la figure 12 est une vue en perspective d'une filière à CD selon un troisième mode de réalisation de l'invention;
les figures 13 et 14 sont des vues de face avant et de côté de la filière à CD illustrée sur la figure 12.

### Description de deux modes de réalisation préférentiels de l'invention

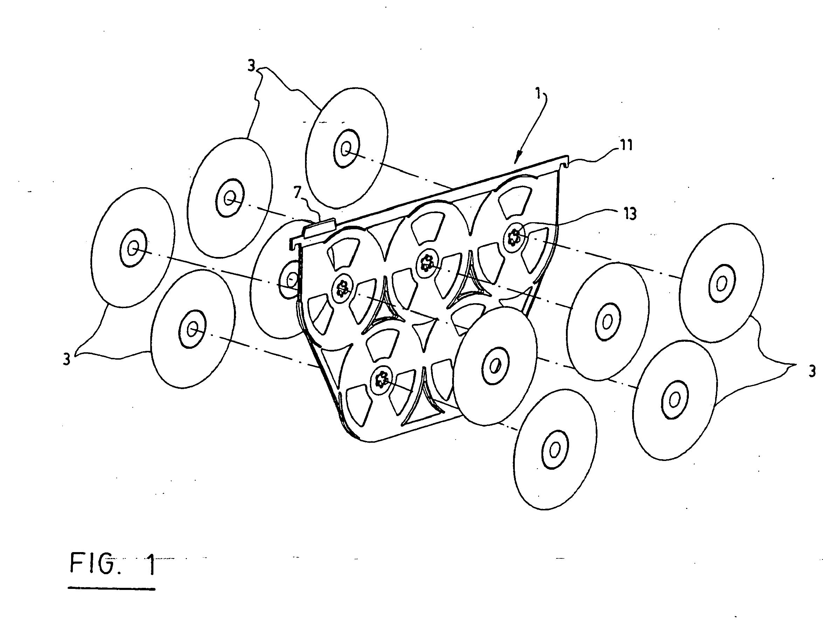

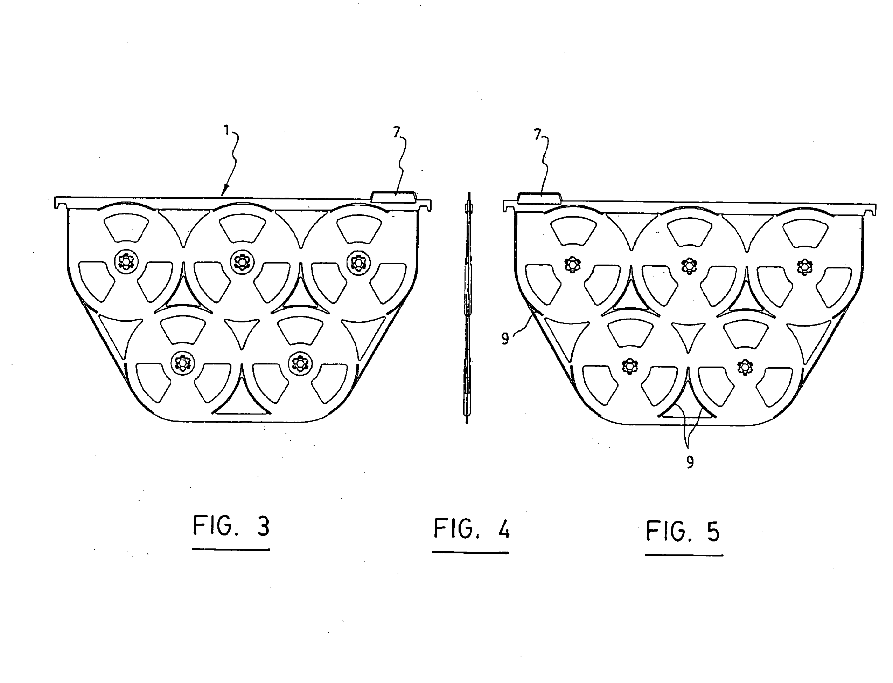

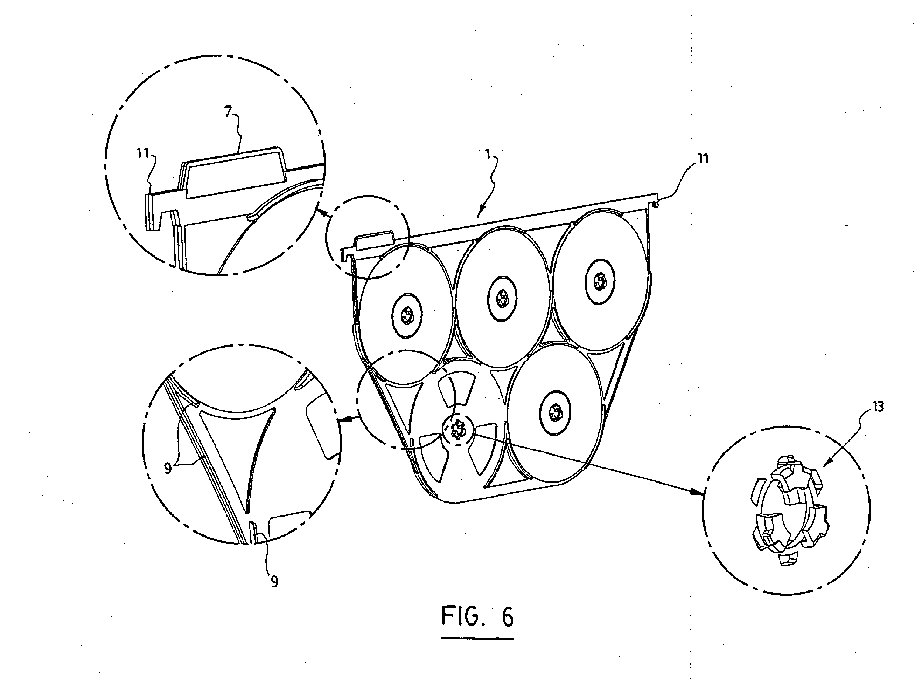

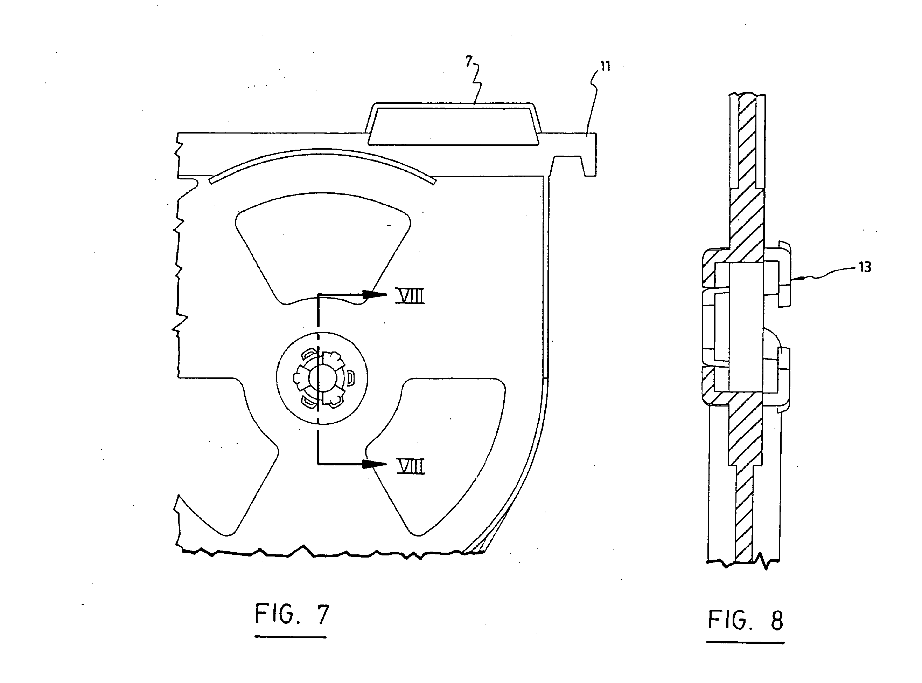

Tel qu'il ressort clairement des figures 1 à 8 annexées, la filière à CD 1 selon le premier mode de réalisation préféré de l'invention est un produit extrêmement mince et rigide permettant le rangement de plusieurs CD numéroté 3, en fait dix 10.

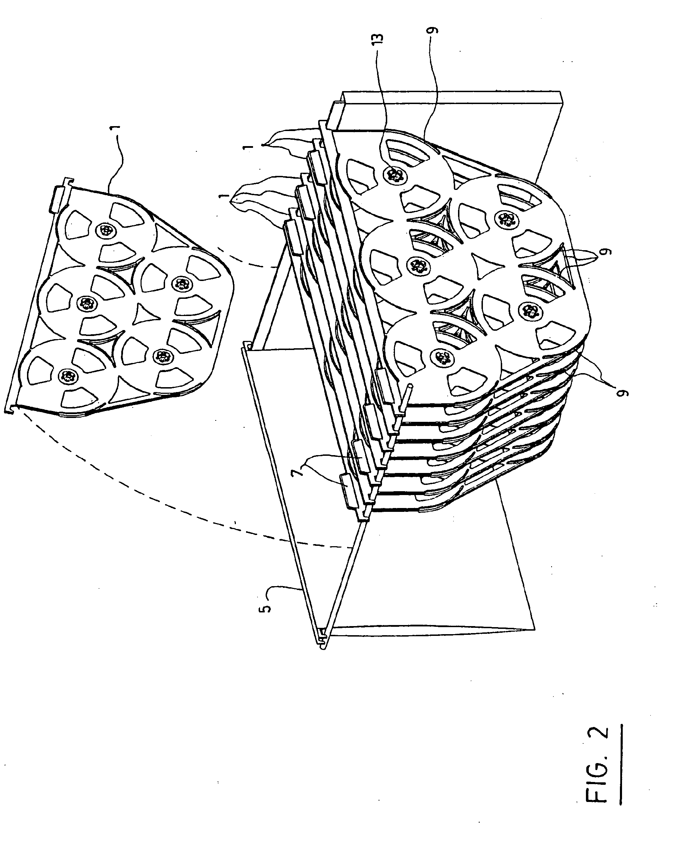

Cette filière à CD reprend le dimensionnel d'une filière conventionnelle au format légal. Beaucoup de composantes de mobilier ont été créées selon ce format ce qui permet le voisinage de la filière à CD 1 avec des filières conventionnelles 5 en papier/carton (voir la figure 2).

La filière à CD 1 a une forme qui suit le principe d'un trapèze inversé afin de faciliter l'insertion dans un tiroir ou tout autre espace de rangement en minimisant le risque d'accrocher les coins et briser la pièce ou décrocher les CD.

Tel que précédemment mentionné, il est possible de disposer cinq CD sur chacune des faces pour un total de dix CD par filière.

Un onglet 7 est de préférence moulé à même la filière permettant du même coup d'identifier la filière ou la manipuler plus aisément.

Avantageusement, des nervures 9 renforcissent la partie supérieure, les côtés et les espaces entre chaque CD. Celles-ci viennent en appui les unes contre les autres, ce qui empêche les surfaces de CD de frotter les unes contre les autres.

Les crochets 11 disposés aux deux extrémités latérales supérieures de filière 1 sont renforcis plus que les autres régions de la pièce. Ces crochets sont avantageusement plus épais que les crochets standard métalliques afin de palier à une éventuelle déformation du polymère utilisé pour le moulage.

Le système d'accrochage 13 des CD est de type classique.

Pour des économies de matière, chaque emplacement de CD est avantageusement évidé dans des zones qui ne changent en rien la rigidité de la pièce.

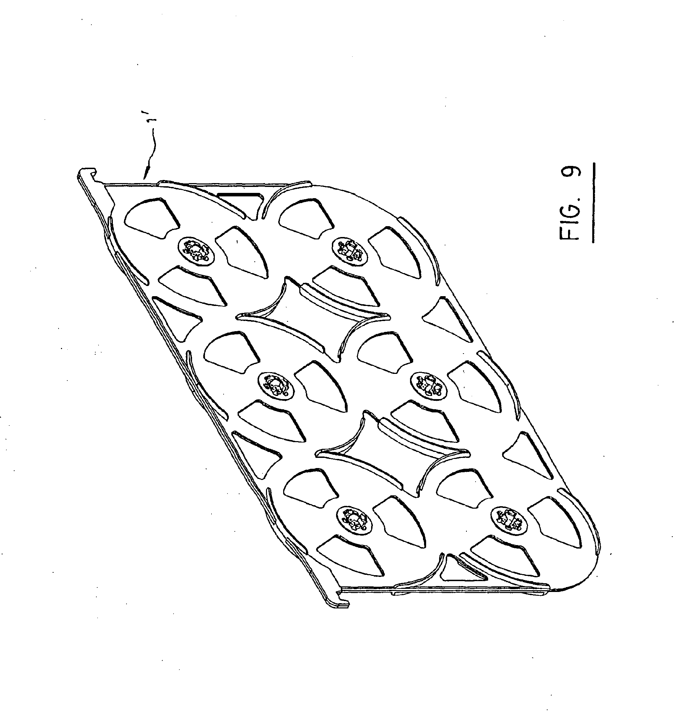

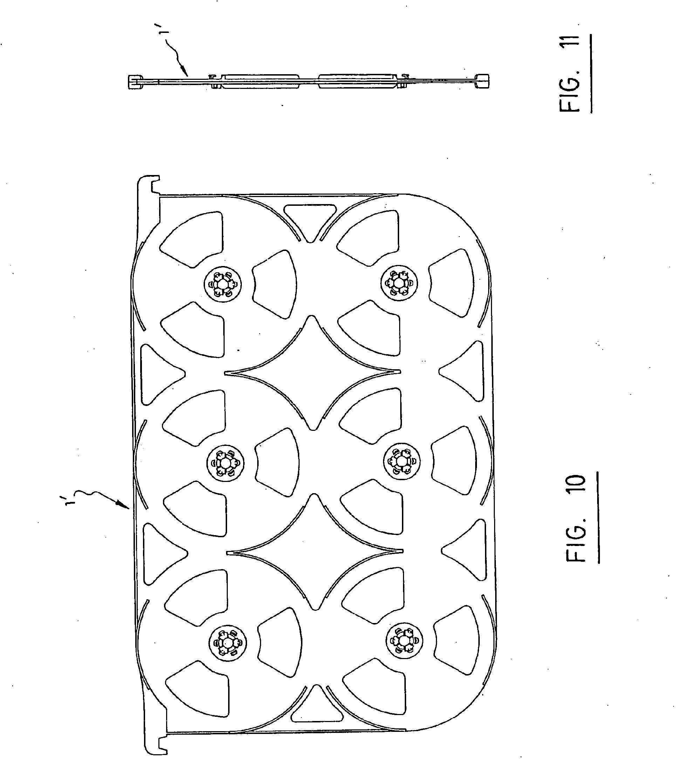

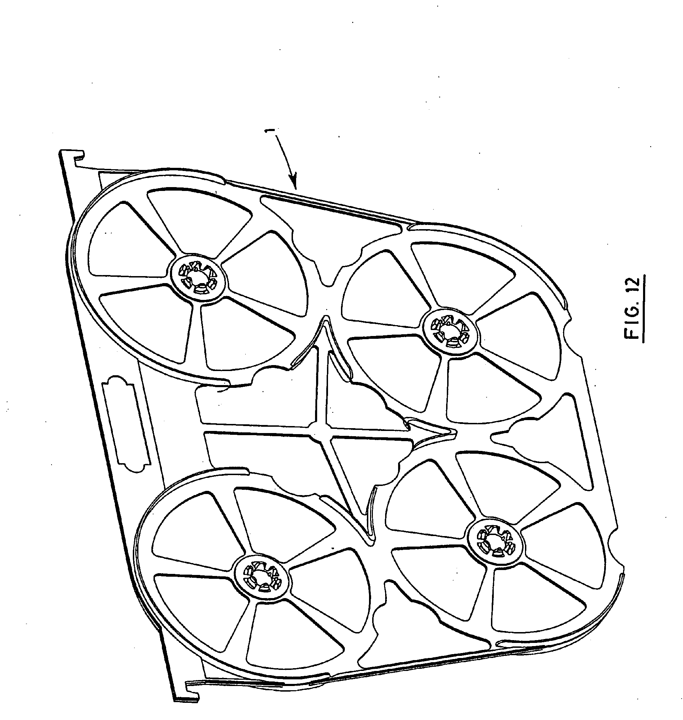

La filière à CD 1' selon le second mode de réalisation préféré de l'invention illustré sur les figures 9 à 11 est similaire à la précédente, sauf que sa forme est rectangulaire plutôt que trapézoïdale en vue de recevoir douze CD au total.

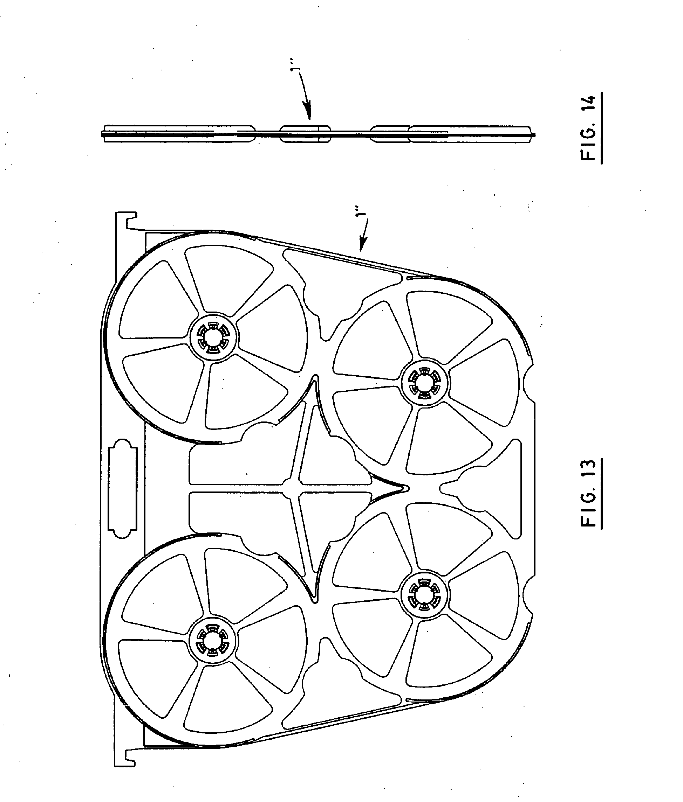

La filière à CD 1" selon le troisième mode de réalisation préféré de l'invention illustré sur les figures 12 à 14 est similaire au précédent mode décrit, sauf qu'elle est conçue pour recevoir quatre CD sur chaque face plutôt que cinq, pour un grand total de huit.

Il va de soi que diverses modifications pourraient être apportées aux modes de réalisation préférentiels ci-dessus décrits sans sortir du cadre de l'invention. Ainsi, par exemple, le format de la filière pourrait varier, de même que son jeu de nervures de renforcement.

## Revendications

1. Un support pour le rangement de CD se présentant sous la forme d'une filière installable dans un tiroir ou un espace de rangement de filières conventionnelles, ladite filière ayant au moins une face pourvue de zones dans lesquelles des CD peuvent être attachés au moyen d'un système d'accrochage tel qu'on le trouve dans les boîtiers à CD.

2. Le support selon la revendication 1, **caractérisé en ce qu'**il a une forme de trapèze inversé et possède quatre ou cinq zones d'attaches sur chaque face, assurant le rangement possible de huit ou dix CD.

3. Le support selon la revendication 1, **caractérisé en ce qu'**il a une forme rectangulaire et possède six zones d'attaches sur chaque face, assurant le rangement possible de douze CD.

4. Le support selon l'une quelconque des revendications 1 à 3, **caractérisé en ce qu'**il est fait en plastique moulé.

5. Le support selon la revendication 4, **caractérisé en ce qu'**il présente une partie supérieure, des côtés et des espaces entre CD pourvus de nervures de renforcement.
